**Europäisches Patentamt**

(19) **European Patent Office**

**Office européen des brevets**

(11) Numéro de publication: **0 041 434**
**B1**

(12) **FASCICULE DE BREVET EUROPEEN**

(45) Date de publication du fascicule du brevet:
16.05.84

(21) Numéro de dépôt: **81400808.2**

(22) Date de dépôt: **21.05.81**

(51) Int. Cl.³: **A 23 K 1/18**

(54) Succédané de pollen utilisable en apiculture.

(30) Priorité: **29.05.80 FR 8011894**

(43) Date de publication de la demande:
**09.12.81 Bulletin 81/49**

(45) Mention de la délivrance du brevet:
**16.05.84 Bulletin 84/20**

(84) Etats contractants désignés:
**BE CH DE GB IT LI LU NL**

(56) Documents cités:
**FR - A - 2 188 963**
**FR - A - 2 381 476**

**CHEMICAL ABSTRACTS, vol. 87, no. 23, 5 décembre 1977, page 494, réf. 183049, Columbus, Ohio, US E.W. HERBERT et al.: "Optimum protein levels required by honey bees (Hymenoptera: Apidae) to initiate and maintain brood rearing"**
**MILCHWIRTSCHAFTLICHE BERICHTE AUS DEN BUNDESANSTALTEN WOLFPASSING UND ROTHOLZ, mars 1977, no. 50, pages 1-5 Y. VRIGNAUD: "Laktose-Hefen. Die Methoden der Produktion und ihre Verwertung in der Ernährung"**

**Le dossier contient des informations techniques présentées postérieurement au dépôt de la demande et ne figurant pas dans le présent fascicule.**

(73) Titulaire: **Vrignaud, Yves, 5, avenue Rivoli, F-92190 Meudon (FR)**
Titulaire: **Belin, Michel, 18, rue du Bourg Voisin, F-21140 Semur en Auxois (FR)**

(72) Inventeur: **Vrignaud, Yves, 5, avenue Rivoli, F-92190 Meudon (FR)**
Inventeur: **Belin, Michel, 18, rue du Bourg Voisin, F-21140 Semur en Auxois (FR)**

(74) Mandataire: **Fedit, René et al, S.A.FEDIT-LORIOT (Cabinet Guerbilsky) 38 avenue Hoche, F-75008 Paris (FR)**

## Succédané de pollen utilisable en apiculture

La présente invention concerne un succédané de pollen utilisable notamment en apiculture.

Pour l'élevage des abeilles, il est nécessaire de suppléer aux pénuries de pollen lorsque celui-ci fait défaut pour les raisons climatiques ou en fin d'hiver. Dans de telles circonstances, les provisions de la ruche s'épuisent alors qu'il faudrait que la colonie élève le plus possible de couvains.

Les apiculteurs ont cherché à résoudre ce problème d'apport de produits protéiniques sans parvenir jusqu'ici à un résultat entièrment satisfaisant.

Parmi les produits proposés et utilisés, on peut citer principalement les sirops de sucre, les poudres d'oeufs, les levures, les substances protéiques telles que l'eau de trempage du maïs.

Une étude sur ce sujet a été publiée dans la revue Apidologie 1977.8.(2).141—146 dans l'article »Optimum . . . Rearing« de Elton W. Herbert et al.

L'échec relatif de ces divers aliments artificiels provient essentiellement d'un déséquilibre dans les proportions des substances élémentaires proposées par rapport à la composition du pollen naturel.

Le résultat pratique immédiat de ces inconvénients est une inappétence des abeilles avec toutes les conséquences de la sous-nutrition pour la prospérité de la colonie et la production du miel.

L'invention a pour but une composition alimentaire ayant une teneur en acides aminés et en vitamines pratiquement identique à celle du pollen à 23—25% de matières protéiniques entièrement assimilable par l'abeille et bien accepté par les ouvrières.

L'invention a pour objet un succédané de pollen alimentaire utilisable en apiculture comme complément protéiné, caractérisé en ce qu'il renfermen en poids:

- 60 à 66% d'au moins une levure-aliment tuée séchée et privée de pouvoir diastasique,
- 32 à 38% d'au moins une protéine du groupe formé par les protéines végétales, à l'état de concentrat ou d'isolats, la caséine soluble et les caséinates,
- 1 à 2% de poudre d'oeuf entier, pour une teneur globale en matières protéiques de 23 à 25% entièrement assimilables par l'abeille.

Un tel succédané peut également renfermer en plus environ, en poids, 0,2 à 0,5% d'un acide du groupe comprenant les acides citrique, tartrique, acétique, lactique, le pH en solution aqueuse à 1% d'un tel succédané étant compris entre 4,2 à 4,5.

Un succédané suivant l'invention peut renfermer également avantageusement 7 à 55% de sucre, 5 à 10% de pollen naturel pour favoriser l'inappétence des abeilles au moins au début ainsi que, pour les mêmes raisons, 0,20 à 0,50% d'aromate constitué par de la poudre d'inflorescence de badiane ou d'autres aromes végétaux.

Un tel succédané peut renfermer également environ 10 à 40% en poids d'eau.

Pour la réalisation d'un succédané suivant l'invention, on peut utiliser avantageusement des levures lactiques du type Kluyveromyces fragilis et/ou Kluyveromyces lactils cultivées sur lactosérum, ou d'autres levures-aliment, toutes levures tuées séchées, privées de pouvoir diastasique.

Comme protéine végétale, on utilisera de préférence des protéines du groupe formé par les protéines de la pomme de terre, du maïs, du soja et autres légumineuses sous forme de concentrats et d'isolats ainsi que la caséine soluble et des caséinates.

Un succédané suivant l'invention peut être préparé à l'état de poudre impalpable à utiliser telle que, comme du pollen naturel.

Suivant un autre mode de réalisation, le succédané est réalisé sous forme de poudre à mélanger à du sirop de sucre pour former une pâte. Cette forme alimentaire est classique pour les apiculteurs mais ne présente pas les avantages d'acceptation immédiate par les abeilles de la poudre.

L'invention sera mieux comprise à l'aide de la description détaillée qui va suivre de deux modes de réalisation de l'invention.

## Exemple 1

Préparation d'un succédané pour la préparation de pâte de nourrissement d'abeilles.

On commence par mélanger 7,450 kg de sucre en poudre impalpable avec 0,350 kg d'acide citrique finement broyé, 0,200 kg d'inflorescence de badiane finement broyées et 1 kg de poudre d'oeuf entier.

On effectue le mélange dans un mélangeur à poudre classique et, lorsqu'il est homogène, on ajoute 59 kg de levure lactique à 48—52% de protéines, telle celle vendue sous la dénomination commerciale de Protibel par la Société dite Fromageries Bel, et 32 kg de protéines de pommes de terre, telles que celle vendue sous la dénomination commerciale de »Lysamine« par la Société dite Roquette Frères.

L'analyse moyenne de ce succédané est de 50% de protéines, 5% de lipides, 33% de glucides, 5% de matières minérales et 5% d'humidité. Le succédané renferme toutes les vitamines dont au moins 0,9 mg/100 g de vitamines B1, 2,1 mg/100 g de vitamines B2 ainsi que 5, 1 mg/100 g d'acide nicotinique, 5,9 mg/100 g d'acide pantothénique et 38,9 mg/100 g de vitamines C. Ce succédané peut être mé-

2

**0 041 434**

langé à un poids approximativement égal de sirop de sucre pour former une pâte. On l'utilise notamment en l'incorporant à un sirop de sucre épais pour obtenir une pâte onctueuse renfermant 50% en poids de sirop de sucre saturé, 40% de succédané et 10% de pollen naturel. Il est avantageux de laisser séjourner la pâte 24 heures dans un réfrigérateur afin que le succédané en poudre slimprègne bien du liquide.

On peut alors déposer la pâte sur la tête des cadres de la ruche, au-dessus de la grappe. Cette pâte renferme 23 à 25% de protéines.

Elle apporte à la colonie d'abeilles, et d'une façon parfaitement équilibrée, des protéines, des lipides, des acides aminés, les vitamines et les oligo-éléments, tous indispensables à l'élevage des couvains. Son utilisation est particulièrement avantageuse au printemps lorsque le pollen fait défaut ou ne peut être récolté par les butineuses du fait des conditions climatiques défavorables.

Il peut être également utilisé au cours de l'année, notamment pour aider la colonie d'abeilles à surmonter les dommages des pesticides ainsi qu'à produire une colonie puissante en vue de récoltes spécialisées et saisonnières ou pour la production d'essaims.

Il permet également d'éviter l'effondrement de l'élevage du couvain din d'été ou à l'automne.


Exemple 2

Préparation d'un succédané en poudre directement utilisable à la place du pollen.

Cette poudre présente les mêmes avantages que le produit en pâte, mais elle est mieux acceptée par les abeilles du fait de son aspect et de sa consistance qui sont extrêmement proches de ceux du pollen naturel.

On peut ainsi utiliser ce succédané pulvérulent en versant la poudre sur la tête de cadre au-dessus de la grappe. Il est avantageux pour les premières applications de verser la poudre directement sur les abeilles. Ultérieurement, on peut déposer de petits tas sur les cadres ou dans la cheminée des nourriseurs.

Pour préparer ce succédané, on commence par mélanger 29,5 kg de levure Probitel, 16 kg de protéine Lysamine, 0,5 kg de poudre d'oeufs entiers, 0,175 kg d'acide citrique en poudre impalpable et 0,1 kg de condiment badiane en poudre impalpable. On mélange ces différents produits dans un mélangeur classique à poudre et, lorsque le mélange est bien homogène, on ajoute 53,725 kg de sucre en poudre impalpable. On peut éventuellement ajouter, en cas de besoin, 3 à 5% de pollen naturel. Pour cette utilisation en poudre on utilisera avantageusement du sucre glace renfermant une très faible proportion d'amidon ou bien un sucre de granulométrie comprise entre 25 et 30 microns additionné d'un très faible pourcentage de phosphate de calcium antimottant, tel celui vendu par la Secrerie de Tirelemont, Belgique.

Le succédané en poudre ainsi obtenu permet aux abeilles de le ramasser en pelote comme le pollen naturel, ce qui facilite encore son acceptation.

Le succédané en poudre ainsi réalisé renferme au moins 23% en poids de protéines, 2,5% de lipides, 64,7% de glucides, 2,8% de matières minérales, 5% d'humidité ainsi que l'ensemble des vitamines, dont au moins 0,450 mg/100 g de vitamines B1, 1,050 mg/100 g de vitamines B2, 2,550 mg/100 g d'acide nicotinique, 7,700 mg/100 g d'acide pantothénique et 20 mg/100 g de vitamine C.

Le tableau ci-après permet d'établir une comparaison entre le pollen naturel et le succédané en poudre. Aussi bien à l'état de pâte qu'à l'état de poudre, le succédané suivant l'invention assure une croissance régulière des larves dont la nymphose et l'éclosion sont normales. Les abeilles ainsi obtenues par un tel élevage sont aussi vigoureuses que celles élevées au pollen et ont une durée de vie égale. Leurs colonies passent l'hiver sans difficultés. Le coefficient d'utilisation digestif des succédanés suivant l'invention est supérieur à 80%. Leur composition, parfaitement équilibrée, assure des résultats d'élevages réguliers.


Tableau comparatif de composition de pollen et du succédané de l'exemple 2 pour 100 g de produit

|  | Pollen | Succédané (poudre) |
|---|---|---|
| Humidité | 12,74 | 5 |
| Matières protéiques | 24,85 | 25 |
| Matières grasses | 8,45 | 2,6 |
| Matières minérales | 2,53 | 2,4 |

**0 041 434**

| | Pollen | Succédané (poudre) |
|---|---|---|
| pH (sur sol à 1%) | 4,9 | 4,4 |
| **Acides aminés** | | |
| Hydroxyproline | 0,24 | |
| Acide cystéique | — | |
| Acide aspartique | 2,87 | 2,467 |
| Thréonine | 1,04 | 1,300 |
| Sérine | 1,38 | 1,225 |
| Acide glutamique | 2,63 | 2,970 |
| Proline | 3,02 | 1,007 |
| Glycocolle | 1,19 | glycogène 3,60 |
| Alanine | 1,27 | 1,702 |
| Valine | 0,60 | 2,140 |
| Cystine | 0,30 | 0,290 |
| Méthionine | 0,49 | 0,390 |
| Isoleucine | 0,62 | 1,150 |
| Leucine | 1,71 | 2,230 |
| Tyrosine | 0,78 | 1,010 |
| Phényl-alanine | 1,13 | 1,380 |
| Lysine | 1,54 | 1,725 |
| Histidine | 0,67 | 0,468 |
| Arginine | 1,32 | 1,38 |

**Revendications**

1. Succédané de pollen alimentaire utilisable en apiculture comme complément protéiné, caractérisé en ce qu'il renferme, en poids:

— 60 à 66% d'au moins une levure-aliment tuée séchée et privée de pouvoir diastasique,
— 32 à 38% d'au moins une protéine du groupe formé par les protéines végétales, à l'état de concentrats ou d'isolats, la caséine soluble et les caséinates,
— 1 à 2% de poudre d'oeuf entier, pour une teneur globale en matières protéiques de 23 à 25% entièrement assimilables par l'abeille.

2. Succédané suivant la revendication 1, caractérisé en ce que la levure est une levure lactique du type Kluyveromyces fragilis et/ou Kluyveromyces lactis cultivée sur le lactosérum.

3. Succédané suivant l'une des revendications 1 à 2, caractérisé en ce qu'il renferme, en plus, en poids: 0,2 à 0,5% d'un acide du groupe formé par les acides citrique, tartrique, acétique, lactique, le pH en solution aqueuse à 1% dudit succédané étant compris entre 4,2 à 4,5.

4. Succédané suivant l'une des revendications 1 à 3, caractérisé en ce qu'il renferme, en plus, en poids, 7 à 55% de sucre.

5. Succédané suivant l'une des revendications 1 à 4, caractérisé en ce qu'il renferme, en plus, en poids, 5 à 10% de pollen naturel.

6.Succédané suivant l'une des revendications 1 à 5, caractérisé en ce qu'il renferme en plus, en poids, 0,20 à 0,50% de poudre d'inflorescence de badiane.

7. Succédané suivant l'une des revendications 1 à 6, caractérisé en ce qu'il renferme en plus, en poids, 10 à 40% d'eau.

8. Succédané suivant l'une des revendications 1 à 7, caractérisé en ce que les protéines végétales font partie du groupe formé par les protéines de la pomme de terre, du maîs, du soja.

9. Succédané suivant l'une des revendications 1 à 8, à mélanger à un poids approximativement égal de sirop de sucre pour former une pâte, caractérisé en ce qu'il renferme, en poids, 50% de protéines, 5% de lipides, 33% de glucides, 5% de matières minérales et 5% d'eau.

10. Succédané suivant la revendication 9, caractérisé en ce qu'il est constitué par un mélange homogène de 59 parties pondérales le levure, 32 de protéines de pomme de terre, 1 de poudre d'oeuf entier, 7,450 de sucre, 0,350 d'acide citrique et 0,200 de poudre de badiane.

11. Succédané suivant l'une des revendications 1 à 8, caractérisé en ce qu'il est constitué par une poudre impalpable, renfermant, en poids, au moins 23% de protéines, 2,5% de lipides, 64,7% de glucides, 2,8% de matières minérales et 5% d'eau.

12. Succédané suivant la revendication 11, caracérisé en ce qu'il est constitué par un mélange homogène de 29,5 parties pondérales de levures, 16 de protéines de pomme de terre, 0,5 de poudre d'oeuf entier, 53,725 de sucre, 0,175 d'acide citrique et 0,1 de poudre de badiane.

## Patentansprüche

1. Ersatzstoff für Pollennahrung als Proteinergänzung zur Verwendung in der Bienenzucht, dadurch gekennzeichnet, daß er

— mindestens 60 bis 66 Gewichtsprozent einer abgetöteten, getrockneten und von Diastasewirkung befreiten Nährhefe,
— mindestens 32 bis 38 Gewichtsprozent eines Proteins aus der durch pflanzliche Proteine gebildeten Gruppe in konzentriertem oder isoliertem Zustand, lösliche Kasein und Kaseinaten und
— ein bis zwei Gewichtsprozent Volleipulver mit einem Gesamtgehalt an Proteinstoffen von 23 bis 25%, die von der Biene assimilierbar sind

besteht.

2. Ersatzstoff nach Anspruch 1, dadurch gekennzeichnet, daß die Nährhefe eine Milchhefe von der Art Kluyveromyces fragilis und/oder auf dem Lactoserum kultivierter Kluyveromyces lactis ist.

3. Ersatzstoff nach den Ansprüchen 1 oder 2, dadurch gekennzeichnet, daß ihm zusätzlich

— 0,2 bis 0,5 Gewichtsprozent einer Säure aus der Gruppe der Zitronen-, Trauben-, Essig- und Milchsäure zugesetzt ist, wobei der $p_H$-Wert einer 1%igen Lösung des Ersatzstoffes zwischen 4,2 und 4,5 liegt.

4. Ersatzstoff nach einem der Ansprüche 1 bis 3, dadurch gekennzeichnet, daß ihm zusätzlich

— 7 bis 55% Zucker

zugefügt ist.

5. Ersatzstoff nach einem der Ansprüche 1 bis 4, dadurch gekennzeichnet, daß ihm zusätzlich

— 5 bis 10 Gewichtsprozent natürliche Pollen

zugesetzt sind.

6. Ersatzstoff nach einem der Ansprüche 1 bis 5, dadurch gekennzeichnet, daß ihm zusätzlich

— 0,20 bis 0,50 Gewichtsprozent Anisholz-Blütenstandpulver

zugesetzt sind.

7. Ersatzstoff nach einem der Ansprüche 1 bis 6, dadurch gekennzeichnet, daß ihm zusätzlich

— 10 bis 40 Gewichtsprozent Wasser

zugesetzt sind.

8. Ersatzstoff nach einem der Ansprüche 1 bis 7, dadurch gekennzeichnet, daß die pflanzlichen

**0 041 434**

Proteine einen Teil der Gruppe darstellen, die von den Proteinen der Kartoffel, des Mais oder der Soja gebildet werden.

9. Ersatzstoff nach einem der Ansprüche 1 bis 8 in etwa gleichen Gewichtsteilen mit Zuckersirup zu einer Paste gemischt, dadurch gekennzeichnet, daß seine Zusammensetzung gegeben ist durch

— 50 Gewichtsprozent Proteine
— 5 Gewichtsprozent Lipide
— 33 Gewichtsprozent Glycide
— 5 Gewichtsprozent Mineralstoffe und
— 5 Gewichtsprozent Wasser.

10. Ersatzstoff nach Anspruch 9, dadurch gekennzeichnet, daß

| — | 59 Gewichtsteile | Hefe, |
| — | 32 Gewichtsteile | Kartoffelproteine |
| — | 1 Gewichtsteil | Volleipuler |
| — | 7,450 Gewichtsteile | Zucker |
| — | 0,350 Gewichtsteile | Zitronensäure und |
| — | 0,200 Gewichtsteile | Anisholz-Pulver |

zu einem homogenen Gemisch vermischt sind.

11. Ersatzstoff nach einem der Ansprüche 1 bis 8, dadurch gekennzeichnet, daß er ein staubfeines Pulver bildet, dessen Zusammensetzung gegeben ist durch

| — | 23 Gewichtsprozent | Proteine |
| — | 2,5 Gewichtsprozent | Lipide |
| — | 65,7 Gewichtsprozent | Glucide |
| — | 2,8 Gewichtsprozent | Mineralstoffe und |
| — | 5 Gewichtsprozent | Wasser |

12. Ersatzstoff nach Anspruch 11, dadurch gekennzeichnet, daß

| — | 29,5 Gewichtsteile | Hefen |
| — | 16 Gewichtsteile | Kartoffelproteine |
| — | 0,5 Gewichtsteile | Volleipulver |
| — | 53,725 Gewichtsteile | Zucker |
| — | 0,175 Gewichtsteile | Zitronensäure und |
| — | 0,1 Gewichtsteil | Anisholz-Pulver |

zu einem homogenen Gemisch vermischt sind.


**Claims**

1. Nourishing pollen substitute for use in apiculture as a protein complement, characterized in that it comprises, by weight:

— 60 to 66% of at least one dried killed yeast deprived of enzymic power,
— 32 to 38% of at least one protein of the group consisting of vegetable proteins, in the form of concentrates or isolates, soluble casein and caseinates,
— 1 to 2% of whole egg powder, for a total content of protein matter of 23 to 25% wholly assimilative by the bees.

2. Substitute according to claim 1, characterized in that the yeast is a lactic yeast of the Kluyveromyces fragilis and/or Kluyveromyces lactis type cultivated on lactoserum.

3. Substitute according to either of claims 1 and 2, characterized in that it comprises, in addition, by weight: 0,2 to 0,5% of an acid of the group consisting of citric, tartaric, acetic and lactic acids, the pH in 1% aqueous solution of said substitute being from 4,2 to 4,5 inclusive.

4. Substitute according to any one of claims 1 to 3, characterized in that it comprises, in addition, by weight, 7 to 55% of sugar.

5. Substitute according to any one of claims 1 to 4, characterized in that it comprises, in addition, by weight, 5 to 10% of natural pollen.

6. Substitute according to any one of claims 1 to 5, characterized in that it comprises, in addition, by weight, 0,20 to 0,50% of badian inflorescence powder.

7. Substitute according to any one of claims 1 to 6, characterized in that it comprises, in addition, by weight, 10 to 40% of water.

8. Substitute according to any one of claims 1 to 7, characterized in that the vegetable proteins are part of the group consisting of potato, maize, and soya proteins.

9. Substitute according to any one of claims 1 to 8, to be mixed with an apporximately equal weight of sugar syrup in order to form a paste, characterized in that it comprises, by weight, 50% of proteins, 5% of lipids, 33% of glucides, 5% of mineral substances and 5% of water.

10. Substitute according to claim 9, characterized in that it is constituted by a homogeneous mixture of 59 parts of yeast, 32 parts of potato proteins, 1 part of whole egg powder, 7,450 parts of sugar, 0,350 of a part of citric acid and 0,200 of a part of badian powder, estimated in terms of weight.

11. Substitute according to any one of claims 1 to 8, characterized in that it is constituted by an impalpable powder comprising, by weight, at least 23% of proteins, 2,5% of lipids, 64,7% of glucides, 2,8% of mineral substances and 5% of water.

12. Substitute according to claim 11, characterized in that it is constituted by a homogeneous mixture of 29,5 parts of yeasts, 16 parts of potato proteins, 0,5 of a part of whole egg powder, 53,725 parts of sugar, 0,175 of a part of citric acid and 0,1 of a part of badian powder, estimated in terms of weight.